# EUROPÄISCHE PATENTSCHRIFT

(11) **EP 0 500 517 B1**
(45) Veröffentlichungstag und Bekanntmachung des Hinweises auf die Patenterteilung: **26.06.1996**
(21) Anmeldenummer: 92890037.2
(22) Anmeldetag: 13.02.1992
(51) Int. Cl.: C21B 13/14

(54) **Verfahren zur Inbetriebnahme einer Anlage zur Herstellung von Roheisen oder Stahlvormaterial, sowie Anlage zur Durchführung des Verfahrens**
Method of starting a plant for producing pig iron or steel pre-material and a plant for carrying out such a method
Procédé pour mettre en route une installation pour la production de fonte ou de prématériau d'acier et installation pour sa mise en oeuvre

(30) Priorität: 19.02.1991 AT 348/91
(43) Veröffentlichungstag der Anmeldung: 26.08.1992
(73) Patentinhaber: DEUTSCHE VOEST-ALPINE INDUSTRIEANLAGENBAU GMBH, D-40219 Düsseldorf (DE)
(72) Erfinder: Kepplinger, Werner-Leopold, Dipl.-Ing. Dr., A-4060 Leonding-Hart (AT); Hauk, Rolf, Dipl.-Ing. Dr., W-4000 Düsseldorf (DE); Vuletic, Bogdan, Dipl.-Ing., W-4000 Düsseldorf (DE); Wallner, Felix, Dipl.-Ing. Dr., A-4020 Linz (AT); Kastner, Walter-Rainer, A-4040 Linz (AT)
(74) Vertreter: Wolfram, Gustav, Dipl.-Ing.

(56) Entgegenhaltungen:
- EP-A- 0 316 299
- DE-C- 3 727 146

## Beschreibung

Die Erfindung betrifft ein Verfahren zur Inbetriebnahme einer Anlage zur Herstellung von Roheisen oder Stahlvormaterial, bei welcher Herstellung teilchenförmige Einsatzstoffe in einem Direktreduktionsschachtofen durch ein Reduktionsgas reduziert, die erhaltenen Eisenschwammpartikel in einem Einschmelzvergaser unter Zuführung von Kohlenstoffträgern und sauerstoffhaltigem Gas bei gleichzeitiger Bildung des Reduktionsgases eingeschmolzen werden und das Reduktionsgas in den Direktreduktionsschachtofen eingeleitet wird, sowie eine Anlage zur Durchführung des Verfahrens.

Aus der DE-C - 3 727 146 ist ein Verfahren zum Anfahren eines Vergasers zur Vergasung von kohlenstoffhältigem Brennstoff mit Hilfe von sauerstoffhältigem Vergasungsmittel bekannt, bei dem in einer mit dem unteren Teil des Vergasers verbundenen Brennkammer ein brennbares Gasgemisch unter Überdruck gezündet und verbrannt wird. Mit einem Verfahren dieser Art ist es jedoch nur möglich, den Vergaser auf eine Temperatur, die etwa der Vergasungstemperatur entspricht und etwa bei 800 bis 1 000° C liegt, aufzuheizen.

Für das Anfahren einer Anlage der eingangs beschriebenen Art sind wesentlich höhere Anfahrtemperaturen erforderlich, da im Einschmelzvergaser mit weit höheren Temperaturen gearbeitet wird. So betragen die Vergasungstemperatur ca. 2 000° C, die Temperatur im Sumpfbereich des Einschmelzvergasers ca. 1 500° C und die Temperatur im Bereich der Abstichöffnungen für Schlacke und Roheisen mindestens 1 350° C.

Die Erfindung stellt sich die Aufgabe, ein Verfahren zur Inbetriebnahme einer Anlage zum Herstellen von Roheisen oder Stahlvormaterial nach der eingangs beschriebenen Art zu schaffen, mit dem hohe, insbesondere die obengenannten Temperaturen im Einschmelzvergaser sowie eine ausreichende Erhitzung des Direktreduktionsschachtofens erreicht werden können.

Diese Aufgabe wird erfindungsgemäß dadurch gelöst,
- daß zunächst der noch leere Einschmelzvergaser mittels eines brennbaren Gases aufgeheizt wird und die entstehenden Rauchgase in den noch leeren Direktreduktionsschachtofen eingeleitet werden,
- daß in den Direktreduktionsschachtofen Koks oder ein entgastes Kohleprodukt chargiert wird und die in den Direktreduktionsschachtofen eingeleiteten Rauchgase durch den Koks bzw. das entgaste Kohleprodukt unter Abgabe ihrer fühlbaren Wärme hindurchgeleitet werden,
- daß der Koks bzw. das entgaste Kohleprodukt hierdurch auf Zündtemperatur aufgeheizt wird und im heißen Zustand in den Einschmelzvergaser chargiert und durch Einleiten eines sauerstoffhaltigen Gases oder Sauerstoff gezündet wird,
- worauf auf das gezündete Bett aus Koks bzw. entgastem Kohleprodukt ein weiteres der Vergasung dienendes Kohle- bzw. Koksbett und in den Direktreduktionsschachtofen die Einsatzstoffe chargiert werden.

Zur Durchführung dieses Verfahrens ist es zweckmäßig, wenn das sauerstoffhältige Gas bzw. der Sauerstoff über eine vor Inbetriebnahme der Anlage in den Einschmelzvergaser auf dessen Boden aufgebrachte verlorene, d.h. während des Betriebs der Anlage einschmelzende Rohrleitung zugeführt wird. Hierdurch ist es in besonders einfacher Weise möglich, das nur beim Anfahren benötigte Gas zuzuführen, ohne daß aufwendige Zusatzeinrichtungen erforderlich sind.

Eine Anlage zur Durchführung des erfindungsgemäßen Verfahrens
- mit einem Direktreduktionsschachtofen, der eine Einsatzstoff-Zuleitung für stückiges Eisenerz, mindestens eine Zuleitung für ein Reduktionsgas mit einem darin befindlichen Ventil, wie einer Gasabsperrklappe, sowie mindestens eine Leitung für das in ihm gebildete Reduktionsprodukt und eine Ableitung für in ihm gebildetes Topgas aufweist, und
- mit einem Einschmelzvergaser, in den die das Reduktionsprodukt aus dem Direktreduktionsschachtofen zu führende Leitung mündet und der Zuleitungen für sauerstoffhältige Gase und Kohlenstoffträger sowie eine in den Direktreduktionsschachtofen mündende Zuleitung für in ihm gebildetes Reduktionsgas sowie Abstiche für Roheisen und Schlacke aufweist,
ist dadurch gekennzeichnet, daß der Einschmelzvergaser mit mindestens einem Aufheizbrenner versehen ist, der eine Zuführung für Brennstoff und eine Zuführung für Verbrennungsgas aufweist.

Gemäß einer bevorzugten Ausführungsform ist auf dem Boden des zunächst leeren Einschmelzvergasers eine Gas-Rohrleitung aus einem etwa bei Schmelztemperatur des Roheisens schmelzenden Material, vorzugsweise aus Stahl, vorgesehen, die mit einem Anschlußstück durch eine Seitenwandöffnung des Einschmelzvergasers nach außen ragt.

Zweckmäßig ist der Aufheizbrenner höhenmäßig im ersten Drittel des Einschmelzvergasers an den Einschmelzvergaser anbringbar und von diesem entfernbar.

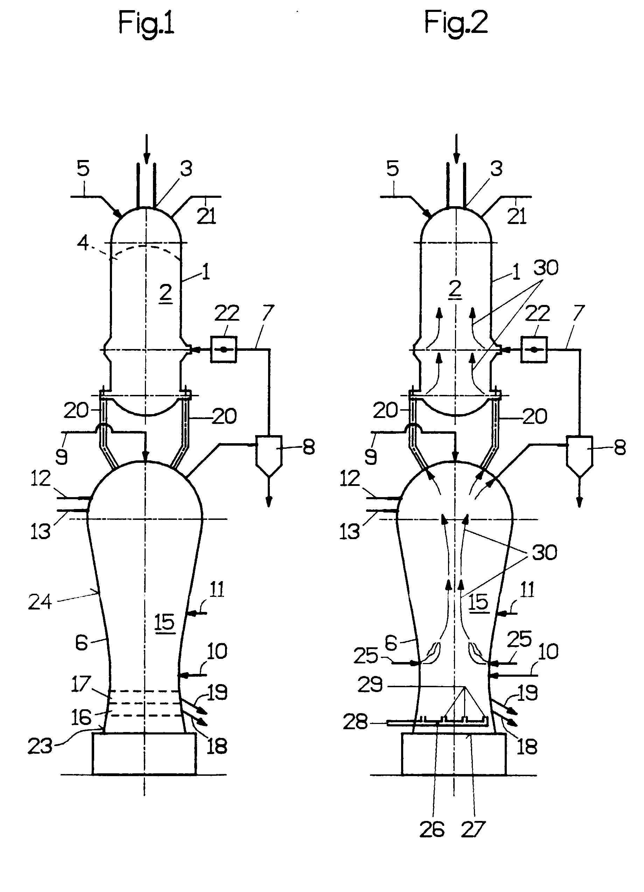

Die Erfindung ist nachfolgend anhand der Zeichnung an einem Ausführungsbeispiel näher erläutert, wobei die Fig. 1 eine Anlage zur Herstellung von Roheisen in schematischer Darstellung im Betriebszustand und die Fig. 2 bis 5 diese Anlage nach jeweils einem zur Inbetriebnahme der Anlage durchgeführten Verfahrensschritt zeigen.

Mit 1 ist ein Direktreduktionsschachtofen bezeichnet, in dessen Direktreduktionszone 2 von oben über eine Zuleitung 3 stückige eisenoxidhältige Einsatzstoffe 4, gegebenenfalls zusammen mit über eine Zuleitung 5 eingebrachten ungebrannten Zuschlägen, chargiert werden. Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird, wobei in der Zuleitung 7 eine Gasreinigungs- und eine Gaskühlungseinrichtung 8 vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammeln sich unterhalb der Einschmelzvergasungszone 15 schmelzflüssiges Roheisen 16 und schmelzflüssige Schlacke 17, die über je einen eigenen Abstich 18, 19 getrennt abgestochen werden.

Das im Schachtofen 1 in der Direktreduktionszone 2 zu Eisenschwamm reduzierte stückige Erz wird zusammen mit den in der Direktreduktionszone 2 gebrannten Zuschlägen über den Schachtofen 1 mit dem Einschmelzvergaser 6 verbindende Leitungen 20 zugeführt, beispielsweise mittels nicht näher dargestellter Austragsschnecken. An dem oberen Teil des Schachtofens 1 schließt eine Ableitung 21 für das in der Direktreduktionszone 2 entstehende Topgas an.

In jeder Zuleitung 7 ist jeweils ein als Gasabsperrklappe ausgebildetes Ventil 22 vorgesehen. Im unteren Bereich des Einschmelzvergasers 6, etwa in Höhe des Übergangs vom zylindrischen Teil 23 in den darüber angeodneten sich erweiternden Teil 24, sind (vgl. Fig. 2 bis 4) externe Aufheizbrenner (25), die mit Koksgas oder Erdgas betreibbar sind, vorgesehen. Diese Aufheizbrenner sind nur beim Aufheizen in Betrieb und können nach der Inbetriebnahme der Anlage vom Einschmelzvergaser 6 entfernt werden.

Bei der Inbetriebnahme der Anlage wird wie folgt vorgegangen:

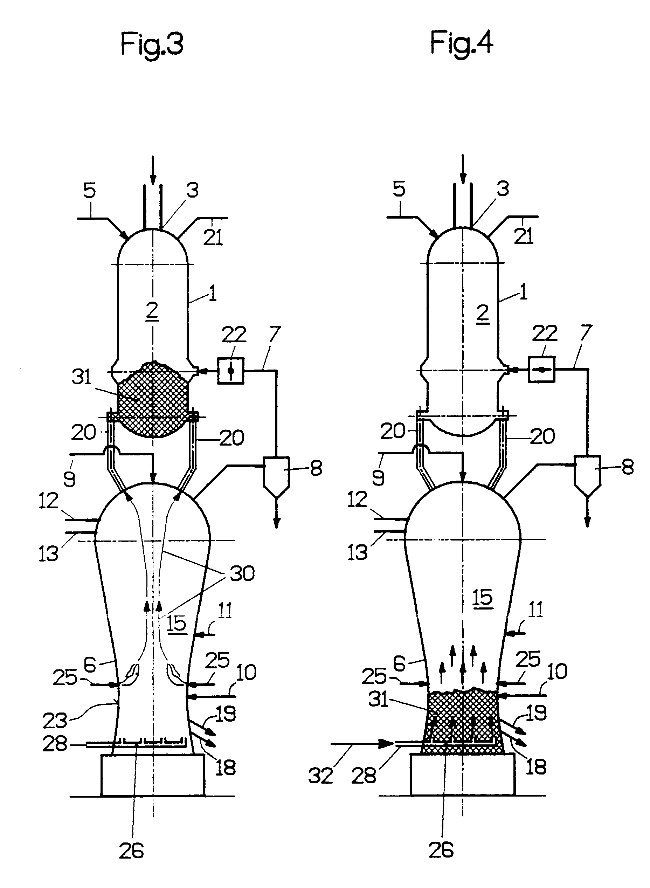

Zunächst wird in den noch kalten und leeren Einschmelzvergaser 6 eine Gas-Rohrleitung 26 eingebracht (vgl. Fig. 2). Diese Gas-Rohrleitung 26 wird auf dem Boden 27 des Einschmelzvergasers 6 aufgelegt und mündet an einer Stelle durch eine Seitenwandöffnung des Einschmelzvergasers 6 mit einem Anschlußstück 28 nach außen. Die Gas-Rohrleitung 26 ist aus Stahlrohren, die an ihrer Oberseite mit Gasaustrittsöffnungen 29 versehen sind, gefertigt und erstreckt sich in mehreren konzentrischen Ringen oder in Form eines Fächers gleichmäßig etwa über die gesamte Bodenfläche. Die Funktion dieser Gas-Rohrleitung 26 ist später anhand der Fig. 3 näher erläutert.

Nach Verlegen dieser Gas-Rohrleitung 26 werden die Aufheizbrenner 25 in Betrieb genommen. Die dabei entstehenden Rauchgase 30 erwärmen die feuerfeste Ausmauerung des leeren Einschmelzvergasers 6 entsprechend den Aufheizbedingungen und strömen über die Zuleitungen 7, deren Gasabsperrventile sich in Offenstellung befinden, und über die Leitungen 20 in den noch leeren Direktreduktionsschachtofen 1 und trocknen und erwärmen auch diesen. Diese Situation ist in Fig. 2 dargestellt.

Anschließend wird, wie in Fig. 3 veranschaulicht, in den Direktreduktionsschachtofen 1 Koks 31 oder ein entgastes Kohleprodukt, wie z. B. Elektrodenbruch oder Petrolkoks, chargiert. Die Menge des Kokses 31 entspricht etwa dem Volumen des unteren, zylindrischen Teiles 23 des Einschmelzvergasers 6. Um sicherzustellen, daß die während des fortgesetzten Aufheizens mit Hilfe der Aufheizbrenner 25 entstehenden Rauchgase 30 durch den chargierten Koks 31 strömen und nicht den Weg des geringeren Widerstandes durch die Zuleitungen 7 nehmen, werden die Gasabsperrklappen 22 geschlossen. Die Rauchgase strömen dann zu 100 % durch die Leitungen 20 und erwärmen den Koks 31 auf Zündtemperatur, die bei etwa 650° C liegt.

Nach Erreichen der Zündtemperatur wird der Koks 31 über die Leitungen 20 in den Einschmelzvergaser 6 gebracht. Gleichzeitig wird durch die Gas-Rohrleitung 26 Luft 32 oder Sauerstoff eingeleitet, wodurch der Koks 31 zündet und verbrennt. Dabei entstehen Temperaturen von etwa 1 200° bis 1 500° C. Diese Situation ist in Fig. 4 dargestellt.

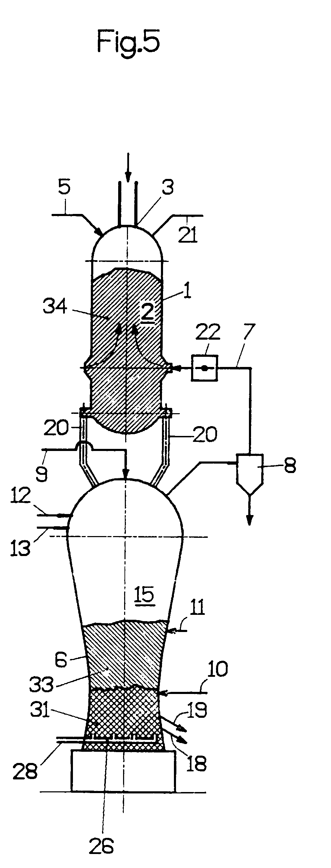

Nach Erreichen dieser Temperatur werden die Aufheizbrenner 25 abgeschaltet und entfernt (Fig. 5). Diese hohe Temperatur sichert beim nachfolgenden Schmelzbetrieb den schmelzflüssigen Zustand der Schlacke 17 und des Roheisens 16.

Nach dem anschließenden Chargieren von kalt einzubringendem Feinkoks bzw. Feinkohle 33 auf das im Einschmelzvergaser 6 schon vorhandene Koksbett 31 wird der Feinkoks bzw. die Feinkohle 33 durch weiteres Einblasen von Bodenluft über die Gas-Rohrleitung 26 auf Zündtemperatur gebracht, und es beginnt nach Inbetriebnahme der Zuleitungen 10 und 11 sowie gegebenenfalls der Leitungen 12, 13 die Vergasung im Einschmelzvergaser 6 in herkömmlicher Weise. Zu diesem Zeitpunkt wird mit dem Chargieren von Anfahrmöller 34, der HO-Schlacke, eventuell Eisenschwamm, Zuschläge (Kalk, Dolomit), eventuell Flußmittel (CaF₂) und Erze enthält, in den Direktreduktionsschachtofen 1 begonnen. Die bei der Vergasung im Einschmelzvergaser 6 entstehenden Reduktionsgase werden nach Öffnen der Gasabsperrklappen 22 über die Zuleitungen 7 in bekannter Weise zur Erzreduktion in den Direktreduktionsschachtofen 1 eingeleitet.

Sobald die Vergasung im Einschmelzvergaser 6 begonnen hat, wird die Gas-Rohrleitung 26 abgestellt, das durch die Seitenwandöffnung nach außen ragende Ende dieser Leitung in das Innere des Einschmelzvergasers 6 hineingestoßen und die Seitenwandöffnung verschlossen. Beim weiteren Betrieb der Anlage schmilzt die Gas-Rohrleitung 26, so daß keine Beeinträchtigung des Schmelzbetriebes gegeben ist.

## Patentansprüche

1. Verfahren zur Inbetriebnahme einer Anlage zur Herstellung von Roheisen (16) oder Stahlvormaterial, bei welcher Herstellung teilchenförmige Einsatzstoffe (4) in einem Direktreduktionsschachtofen (1) durch ein Reduktionsgas reduziert, die erhaltenen Eisenschwammpartikel in einem Einschmelzvergaser (6) unter Zuführung von Kohlenstoffträgern und sauerstoffhaltigem Gas bei gleichzeitiger Bildung des Reduktionsgases eingeschmolzen werden und das Reduktionsgas in den Direktreduktionsschachtofen (1) eingeleitet wird, dadurch gekennzeichnet,
- daß zunächst der noch leere Einschmelzvergaser (6) mittels eines brennbaren Gases aufgeheizt wird und die entstehenden Rauchgase (30) in den noch leeren Direktreduktionsschachtofen (1) eingeleitet werden (Fig. 2),
- daß in den Direktreduktionsschachtofen (1) Koks (31) oder ein entgastes Kohleprodukt chargiert wird und die in den Direktreduktionsschachtofen (1) eingeleiteten Rauchgase durch den Koks (31) bzw. das entgaste Kohleprodukt unter Abgabe ihrer fühlbaren Wärme hindurchgeleitet werden (Fig. 3),
- daß der Koks (31) bzw. das entgaste Kohleprodukt hierdurch auf Zündtemperatur aufgeheizt wird und im heißen Zustand in den Einschmelzvergaser (6) chargiert und durch Einleiten eines sauerstoffhaltigen Gases oder Sauerstoff gezündet wird (Fig. 4),
- worauf auf das gezündete Bett aus Koks (31) bzw. entgastem Kohleprodukt ein weiteres der Vergasung dienendes Kohle- bzw. Koksbett (33) und in den Direktreduktionsschachtofen (1) die Einsatzstoffe (34) chargiert werden (Fig. 5).

2. Verfahren nach Anspruch 1, dadurch gekennzeichnet, daß das sauerstoffhältige Gas bzw. der Sauerstoff über eine vor Inbetriebnahme der Anlage in den Einschmelzvergaser (6) auf dessen Boden (27) aufgebrachte verlorene, d.h. während des Betriebs der Anlage einschmelzende Rohrleitung (26) zugeführt wird.

3. Anlage zur Durchführung des Verfahrens nach Anspruch 1 oder 2,
- mit einem Direktreduktionsschachtofen (1), der eine Einsatzstoff-Zuleitung (3) für stückiges Eisenerz, mindestens eine Zuleitung (7) für ein Reduktionsgas mit einem darin befindlichen Ventil (22), wie einer Gasabsperrklappe, sowie mindestens eine Leitung (20) für das in ihm gebildete Reduktionsprodukt und eine Ableitung (21) für in ihm gebildetes Topgas aufweist, und
- mit einem Einschmelzvergaser (6), in den die das Reduktionsprodukt aus dem Direktreduktionsschachtofen (1) zuführende Leitung (20) mündet und der Zuleitungen (9 bis 13) für sauerstoffhältige Gase und Kohlenstoffträger sowie eine in den Direktreduktionsschachtofen (1) mündende Zuleitung (7) für in ihm gebildetes Reduktionsgas sowie Abstiche (18, 19) für Roheisen (16) und Schlacke (17) aufweist,
dadurch gekennzeichnet,
- daß der Einschmelzvergaser (6) mit mindestens einem Aufheizbrenner (25) versehen ist, der eine Zuführung für Brennstoff und eine Zuführung für Verbrennungsgas aufweist.

4. Anlage nach Anspruch 3, dadurch gekennzeichnet, daß auf dem Boden des zunächst leeren Einschmelzvergasers eine Gas-Rohrleitung aus einem etwa bei Schmelztemperatur des Roheisens schmelzenden Material, vorzugsweise aus Stahl, vorgesehen ist, die mit einem Anschlußstück (28) durch eine Seitenwandöffnung des Einschmelzvergasers (6) nach außen ragt.

5. Anlage nach Anspruch 3 oder 4, dadurch gekennzeichnet, daß der Aufheizbrenner höhenmäßig im ersten Drittel des Einschmelzvergasers (6) an den Einschmelzvergaser (6) anbringbar und von diesem entfernbar ist.

## Claims

1. A method of starting a plant for the production of pig iron (16) or steel pre-material, in which production particulate charging substances (4) are reduced by a reducing gas in a direct-reduction shaft furnace (1), the sponge iron particles obtained are smelted in a meltdown gasifier (6) under supply of carbon carriers and oxygen-containing gas at the simultaneous formation of reducing gas and the reducing gas is injected into the direct-reduction shaft furnace (1), characterised in that
- at first the still empty meltdown gasifier (6) is heated up by means of a combustible gas and the smoke gases (30) forming are introduced into the still empty direct-reduction shaft furnace (1) (Fig. 2),
- coke (31) or a degassed coal product is charged into the direct-reduction shaft furnace (1) and the smoke gases introduced into the direct-reduction furnace (1) are passed through the coke (31) or the degassed coal product respectively, by releasing their sensible heat (Fig. 3),
- the coke (31) or the degassed coal product, respectively, thereby is heated to ignition temperature and is charged into the meltdown gasifier (6) in the hot state, catching fire upon the injection of an oxygen-containing gas or of oxygen (Fig. 4),
- whereupon a further coal or coke bed (33), respectively, that serves for gasification is charged on to the ignited bed of coke (31) or degassed coal product and the charging substances (34) are charged into the direct-reduction shaft furnace (1) (Fig. 5).

2. A method according to claim 1, characterised in that the oxygen containing gas or the oxygen, respectively, is supplied via a pipe duct (26) mounted in the melt-down gasifier (6) at the bottom (27) thereof prior to starting the plant, which pipe duct is lost, i.e. melts during operation of the plant.

3. A plant for carrying out the method according to claim 1 or 2,
- with a direct-reduction shaft furnace (1) comprising a charging substance supply duct (3) for lumpy iron ore, at least one feed duct (7) for a reducing gas with a valve (22) located therein, such as a butterfly valve, as well as at least one duct (20) for the reduction product formed therein and a discharge duct (21) for top gas formed therein, and
- with a meltdown gasifier (6) into which the duct (20) supplying the reduction product from the direct-reduction shaft furnace (1) enters and which comprises feed ducts (9 to 13) for oxygen-containing gases and carbon carriers as well as a feed duct (7) ending in the direct-reduction shaft furnace (1) and provided for reducing gas formed therein, as well as taps (18, 19) for pig iron (16) and slag (17),
characterised in that
- the meltdown gasifier (6) is provided with at least one heat-up burner (25) comprising a supply means for fuel and a supply means for combustion gas.

4. A plant according to claim 3, characterised in that a gas-pipe duct of a material melting at approximately the melting temperature of the pig iron, preferably of steel, is provided on the bottom the the at first empty meltdown gasifier, which gas pipe duct projects outwardly through a side wall opening of the meltdown gasifier (6) by a connection piece (28).

5. A plant according to claim 3 or 4, characterised in that the heat-up burner is attachable to the meltdown gasifier (6) in the first third of the meltdown gasifier (6) in terms of height, and removable from the same.

## Revendications

1. Procédé pour mettre en service une installation pour la production de fonte brute (16) ou d'acier préaffiné, dans laquelle des substances de cémentation (4) en forme de particules sont réduites dans un four à réduction directe (1) par un gaz réducteur, les particules d'éponge de fer résultantes sont fondues dans un gazéificateur de fusion (6) en amenant des supports de carbone et un gaz contenant de l'oxygène, en formant simultanément le gaz réducteur, et le gaz réducteur est amené dans le four à réduction directe (1), caractérisé en ce que :
- le gazéificateur de fusion (6) tout d'abord vide est réchauffé au moyen d'un gaz combustible, et les gaz de fumée (30) qui se développent sont amenés dans le four à réduction directe (1) qui est encore vide,
- dans le four à réduction directe (1), on charge du coke (31) ou un produit de charbon dégazé, et les gaz de fumée amenés dans le four à réduction directe (1) sont amenés à travers le coke (31) ou le produit de charbon dégazé en dégageant leur chaleur sensible,
- le coke (31) ou le produit de charbon dégazé est réchauffé par ce fait à une température d'allumage et est chargé à l'état chaud dans le gazéificateur de fusion (6), et allumé par introduction d'un gaz contenant de l'oxygène, ou d'oxygène,
- suite à quoi on charge sur le lit allumé de coke (31) ou de produit de charbon dégazé un autre lit de charbon ou de coke (33) servant à la gazéification, et on charge dans le four à réduction directe (1) les substances de cémentation (34).

2. Procédé selon la revendication 1, caractérisé en ce que le gaz contenant de l'oxygène ou l'oxygène est amené via une conduite tubulaire (26) posée avant la mise en service de l'installation dans le gazéificateur de fusion (6) sur son fond (27), ladite conduite étant perdue, c'est-à-dire fondue pendant le fonctionnement de l'installation.

3. Installation pour la mise en oeuvre du procédé selon l'une ou l'autre des revendications 1 et 2, comportant:
- un four à réduction directe (1) qui présente une conduite d'amenée (3) de substances de cémentation pour du minerai de fer en morceaux, au moins une conduite d'amenée (7) pour un gaz réducteur qui comporte une soupape (22) située dans celle-ci, tel qu'un clapet d'obturation de gaz, ainsi qu'au moins une conduite (20) pour le produit de réduction formé dans ce four et une conduite d'évacuation (21) pour le gaz supérieur formé dans ce four, et
- un gazéificateur de fusion (6) dans lequel débouche la conduite (20) amenant le produit de réduction hors du four à réduction directe (1), et qui présente des conduites d'amenée (9 à 13) pour des gaz contenant de l'oxygène et des supports de carbone, ainsi qu'une conduite d'amenée (7) débouchant dans le four à réduction directe (1) pour le gaz réducteur formé dans celui-ci ainsi que des orifices de coulée (18, 19) pour la fonte brute (16) et les scories (17),
caractérisée en ce que le gazéificateur de fusion (6) est pourvu d'au moins un brûleur de réchauffement (25) qui présente une amenée pour le combustible et une amenée pour le gaz de combustion.

4. Installation selon la revendication 3, caractérisée en ce qu'il est prévu sur le fond du gazéificateur de fusion qui est tout d'abord vide une conduite tubulaire de gaz constituée en un matériau, de préférence de l'acier, fondant approximativement à la température de fusion de la fonte brute, cette conduite dépassant vers l'extérieur par un élément de raccordement (28) à travers une ouverture de paroi latérale du gazéificateur de fusion (6).

5. Installation selon l'une ou l'autre des revendications 3 et 4, caractérisée en ce que le brûleur de réchauffement peut être agencé sur le gazéificateur de fusion (6) à la hauteur du premier tiers du gazéificateur de fusion (6), et être enlevé de celui-ci.
